# EUROPÄISCHE PATENTANMELDUNG

(11) **EP 1 203 800 A2**
(43) Veröffentlichungstag der Anmeldung: **08.05.2002**
(21) Anmeldenummer: 01126241.7
(22) Anmeldetag: 05.11.2001
(51) Int. Cl.: C09J 7/04

(54) **Klebeband**

(30) Priorität: 06.11.2000 DE 10054909
(71) Anmelder: Delphi Technologies, Inc., Troy, MI 48007 (US)
(72) Erfinder: Hegedüs, Laszlo, 42389 Wuppertal (DE); Hashemi, Madjid, 44227 Dortmund (DE); Fischer, Christian, 45721 Haltern (DE)
(74) Vertreter: Manitz, Finsterwald & Partner GbR

(57) **Zusammenfassung**

Ein Klebeband weist eine Vorderseite und eine Rückseite auf, die von zwei Längskanten begrenzt sind, wobei auf der Vorderseite nur teilweise eine Klebeschicht vorgesehen ist.

## Beschreibung

Die Erfindung betrifft ein Klebeband nach dem Oberbegriff des Anspruchs 1 mit einer Vorderseite und einer Rückseite, die von zwei Längskanten begrenzt sind, wobei auf der Vorderseite eine Klebeschicht vorgesehen ist.

Ein solches Klebeband wird beispielsweise zum Ummanteln von Kabelsätzen in Kraftfahrzeugen benutzt, um Kabel zu bündeln und zu schützen. Zu diesem Zweck wird der Kabelsatz mit dem Klebeband spiralförmig ummantelt. Infolgedessen wird der Kabelsatz relativ steif und der Biegeradius des Kabelsatzes wird verringert, wodurch ein platzsparendes Verlegen des Kabelsatzes in einem Kraftfahrzeug erschwert wird.

Es ist die Aufgabe der Erfindung, ein Klebeband anzugeben, das zum Ummanteln eines Kabelsatzes besser geeignet ist.

Diese Aufgabe wird gelöst durch ein Klebeband mit den Merkmalen des Anspruchs 1 und insbesondere dadurch, daß die Vorderseite des Klebebandes mindestens einen ersten Bereich aufweist, der frei von der Klebeschicht ist, und mindestens einen zweiten Bereich, der mit der Klebeschicht versehen ist.

Wird ein Kabelsatz mit einem erfindungsgemäßen Klebeband spiralförmig bzw. schraubenlinienförmig ummantelt, so wird die Mantelfläche des Kabelsatzes nicht vollständig sondern nur teilweise oder auch gar nicht verklebt, wodurch eine hohe Flexibilität des ummantelten Kabelsatzes gewährleistet ist. Infolgedessen sind kleine Biegeradien des ummantelten Kabelsatzes möglich, was eine platzsparende Verlegung des ummantelten Kabelsatzes, beispielsweise in einem Kraftfahrzeug, erleichtert. Zudem sind die Herstellungskosten eines derartigen Klebebandes im Vergleich zu Klebebändern mit einer vollständig von einer Klebeschicht bedeckten Vorderseite geringer.

Vorteilhafte Ausführungsformen der Erfindung sind in der Beschreibung, der Zeichnung und den Unteransprüchen beschrieben.

Das Klebeband kann als Endlos-Klebeband ausgebildet sein, was insbesondere eine automatisierte und kontinuierliche spiralförmige Ummantelung von langgestreckten Objekten ermöglicht.

Der mit der Klebeschicht versehene zweite Bereich kann an mindestens eine der Längskanten angrenzen. Dadurch kann ein Kabelsatz derart spiralförmig ummantelt werden, daß die Klebeschicht aufeinanderfolgender Windungen des Klebebandes zumindest überwiegend, vorzugsweise vollständig auf der Rückseite des Klebebandes und nicht auf dem Kabelsatz selbst festgeklebt wird. Hierdurch kann sich der Kabelsatz innerhalb der Umhüllung weitgehend frei bewegen, wodurch die gewünschte Flexibilität gewährleistet ist.

Der mit der Klebeschicht versehene zweite Bereich kann streifenförmig ausgebildet sein. Infolgedessen wird bei einer spiralförmigen Ummantelung eines Kabelsatzes die Klebeschicht spiralförmig angeordnet.

Der mit der Klebeschicht versehene zweite Bereich kann sich über etwa 10 % bis 75 %, bevorzugt 10 % bis 50 % der Breite des Klebebandes erstrecken, so daß ein sicherer Verbund der einzelnen Windungen gewährleistet ist, ohne daß das Klebeband auf dem Kabelsatz selbst verklebt wird.

Nachfolgend wird die Erfindung rein beispielhaft unter Bezugnahme auf die beigefügten Zeichnungen beschrieben. Es zeigen:
- Fig. 1: schematisch eine perspektivische Gesamtansicht eines Klebebandes;
- Fig. 2: eine vergrößerte Querschnittsansicht des Klebebandes von Fig. 1;
- Fig. 3: eine Draufsicht auf eine Vorderseite des Klebebandes von Fig. 1 und 2; und
- Fig. 4: einen Kabelsatz, der mit einem Klebeband gemäß der Erfindung ummantelt ist.

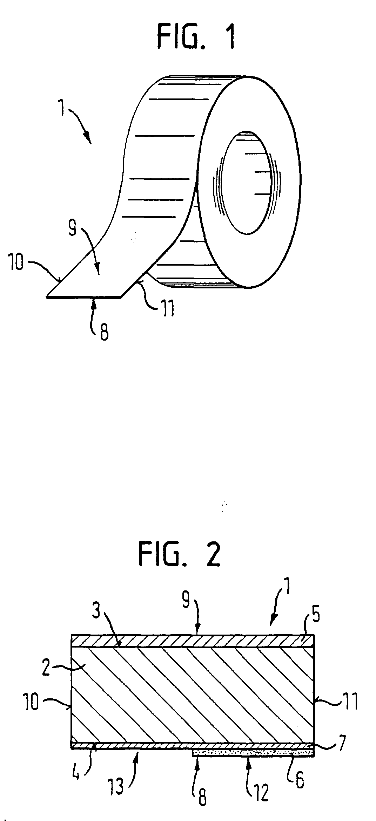

Das in Fig. 1 dargestellte Klebeband 1 weist eine Vorderseite 8, eine Rückseite 9 und zwei Längskanten 10, 11 auf und ist als Endlos-Klebeband ausgebildet, das zu einer Rolle aufgerollt ist.

Wie Fig. 2 zeigt, weist das Klebeband 1 eine Trägerschicht 2 auf, deren Rückseite 3 vollständig von einer Deckschicht 5 bedeckt ist, deren äußere Oberfläche die Rückseite 9 des Klebebandes 1 bildet. Die Vorderseite 4 der Trägerschicht 2 ist vollständig mit einer Haftvermittlerschicht (Primer) 7 bedeckt, wobei auf der von der Trägerschicht 2 abgewandten Seite der Haftvermittlerschicht 7 eine Klebeschicht 6 vorgesehen ist, die sich jedoch nicht über die gesamte sondern nur über etwa die halbe Breite des Klebebandes 1 erstreckt. Die Klebeschicht 6 und die Haftvermittlerschicht 7 schließen bündig mit der in Fig. 2 rechten Längskante 11 des Klebebandes 1 ab.

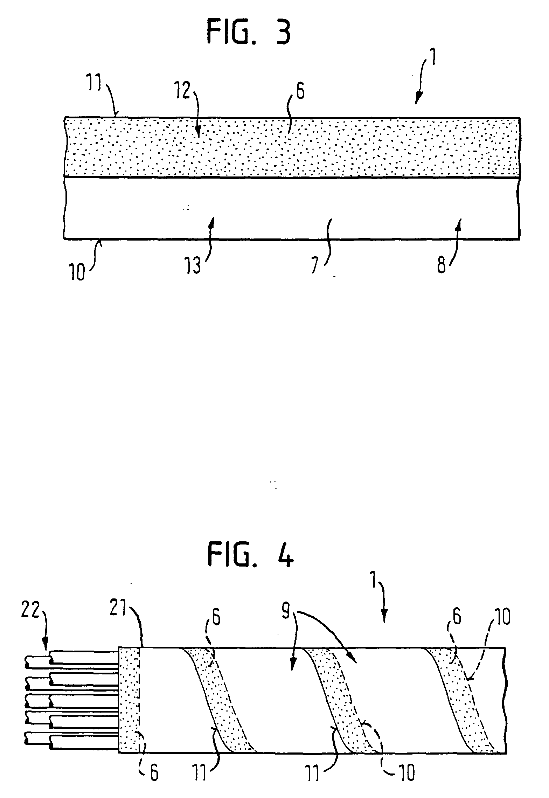

Fig. 3 zeigt eine Draufsicht auf die Vorderseite 8 des Klebebandes 1. Wie ersichtlich ist, erstreckt sich die Klebeschicht 6 streifenförmig in einem Bereich 12 in Längsrichtung des Klebebandes 1. Auf diese Weise ist auf der Vorderseite 8 des Klebebandes 1 ein weiterer streifenförmiger Bereich 13 gebildet, der sich ebenfalls in Längsrichtung des Klebebandes 1 erstreckt, und der frei von der Klebeschicht 6 ist. Infolgedessen ist das Klebeband 1 auch flexibler als Klebebänder, deren Vorderseite vollständig mit einer Klebeschicht bedeckt ist.

Für die Trägerschicht 2 kann ein Gewebe, Vlies, Polyester-Velours oder ein anderes geeignetes Material verwendet werden. Die oben beschriebene Klebeschicht 6 ist bei dem dargestellten Ausführungsbeispiel in Form eines kontinuierlichen Streifens ausgebildet. Die Klebeschicht 6 kann aber auch in dem streifenförmige Bereich 12 mit Unterbrechungen ausgebildet sein, d.h. der streifenförmige Bereich muß nicht kontinuierlich ausgebildet sein. Dabei kann die Klebeschicht 6 auch ein Muster bilden. Der streifenförmige Bereich 12 nimmt bevorzugt etwa 10 -50 % der Breite des Klebebandes 1 ein.

Fig. 4 zeigt einen Kabelsatz 22, der mit einer weiteren Ausführungsform eines erfindungsgemäßen Klebebandes umwickelt ist. Diese zweite Ausführungsform entspricht im wesentlichen der oben beschriebenen ersten Ausführungsform, jedoch beträgt die Breite der Klebeschicht 6 etwa 20 % der Breite des Klebebandes 1.

Erfindungsgemäß wird der Kabelsatz 22 spiralförmig bzw. schraubenlinienförmig mit dem Klebeband 1 umwickelt, wobei die Klebeschicht 6 einer ersten Windung 21 des Klebebandes 1 auf den Kabelsatz 22 aufgeklebt wird, um den Anfang der Ummantelung zu fixieren. Danach wird das Klebeband 1 derart um den Kabelsatz 22 gewickelt, daß bei nachfolgenden Windungen die streifenförmige Klebeschicht 6 auf die Rückseite 9 einer vorlaufenden Windung des Klebebandes 1 geklebt wird. Dadurch wird im folgenden Verlauf das Klebeband nur auf sich selbst, jedoch nicht auf den Kabelsatzes 22 geklebt. Der Kabelsatz 22 bleibt somit innerhalb der Ummantelung vollständig unverklebt. Dies gewährleistet, daß die Steifheit des ummantelten Kabelsatzes 22 nicht erhöht und seine Flexibilität nicht oder nur geringfügig verringert wird. Aufgrund dessen werden kleine Biegeradien des ummantelten Kabelsatzes 22 ermöglicht.

Das erfindungsgemäße Klebeband kann zum Ummanteln von langgestreckten flexiblen Objekten verwendet werden, ohne deren Flexibilität stark einzuschränken und deren Biegeradien nachteilig zu verringern. Ferner werden die langgestreckten, flexiblen Objekte durch die Ummantelung geschützt. Außerdem sind die Herstellungskosten des erfindungsgemäßen Klebebandes im Vergleich zu Klebebändern, deren Vorderseite vollständig von der Klebeschicht bedeckt ist, wegen des verringerten Materialverbrauchs für die Klebeschicht geringer.

### Bezugszeichenliste

- 1: Klebeband
- 2: Trägerschicht
- 3: Rückseite der Trägerschicht
- 4: Vorderseite der Trägerschicht
- 5: Deckschicht
- 6: Klebeschicht
- 7: Haftvermittlerschicht
- 8: Vorderseite des Klebebandes
- 9: Rückseite des Klebebandes
- 10: Längskante
- 11: Längskante
- 12: Bereich mit Klebeschicht
- 13: Bereich ohne Klebeschicht
- 21: erste Windung
- 22: Kabelsatz

## Patentansprüche

1. Klebeband mit einer Vorderseite (8) und einer Rückseite (9), die von zwei Längskanten (10, 11) begrenzt sind, wobei auf der Vorderseite (8) eine Klebeschicht (6) vorgesehen ist,
**dadurch gekennzeichnet ,**
**daß** die Vorderseite (8) mindestens einen ersten Bereich (13) aufweist, der frei von der Klebeschicht (6) ist, und mindestens einen zweiten Bereich (12), der mit der Klebeschicht (6) versehen ist.

2. Klebeband nach Anspruch 1,
**dadurch gekennzeichnet,**
**daß** das Klebeband (1) als Endlos-Klebeband ausgebildet ist.

3. Klebeband nach Anspruch 1,
**dadurch gekennzeichnet ,**
**daß** der mit der Klebeschicht (6) versehene zweite Bereich (12) an mindestens eine der Längskanten (10, 11) angrenzt.

4. Klebeband nach Anspruch 1,
**dadurch gekennzeichnet ,**
**daß** der mit der Klebeschicht (6) versehene zweite Bereich (12) streifenförmig ausgebildet ist.

5. Klebeband nach Anspruch 1,
**dadurch gekennzeichnet ,**
**daß** der mit der Klebeschicht (6) versehene zweite Bereich (12) sich über etwa 10 % - 50 % der Breite des Klebebandes (1) erstreckt.

6. Kabelsatz mit einem Klebeband nach zumindest einem der vorstehenden Ansprüche, wobei der Kabelsatz (22) von dem Klebeband (1) insbesondere spiralförmig ummantelt ist.

7. Kabelsatz nach Anspruch 6, wobei die Klebeschicht (6) zumindest überwiegend, vorzugsweise im wesentlichen vollständig, auf der Rückseite (9) von vorangehenden Windungen des Klebebandes (1) festgeklebt ist.

8. Verfahren zum Herstellen eines ummantelten Kabelsatzes unter Verwendung eines Klebebandes (1) nach zumindest einem der vorstehenden Ansprüche 1 - 5, wobei der Kabelsatz (22) spiralförmig mit dem Klebeband (1) umwickelt wird und die Klebeschicht (6) zumindest überwiegend auf der Rückseite (9) von vorangehenden Windungen des Klebebandes (1) und nicht auf dem Kabelsatz (22) festgeklebt wird.
